(19) Europäisches Patentamt
European Patent Office
Office européen des brevets

(11) Publication number: **0 100 225 A1**

# (12) EUROPEAN PATENT APPLICATION

(21) Application number: 83304290.6

(22) Date of filing: 25.07.83

(51) Int. Cl.³: G 01 F 23/00

(30) Priority: 26.07.82 US 402188

(43) Date of publication of application: 08.02.84 Bulletin 84/6

(84) Designated Contracting States: DE FR GB IT

(71) Applicant: THE BABCOCK & WILCOX COMPANY, 1010 Common Street P.O. Box 60035, New Orleans Louisiana 70160 (US)

(72) Inventor: Keyes, Marion A. IV., 120 Riverstone Drive, Chagrin Falls Ohio 44022 (US)
Inventor: Salmen, Richard A., Deceased (US)

(74) Representative: Cotter, Ivan John et al, D. YOUNG & CO. 10 Staple Inn, London WC1V 7RD (GB)

## (54) Liquid level gauges.

(57) A water level gauge comprises a column (10) for containing water, a plurality of light sources (14) on one side of the column and a plurality of detector assemblies (28) on an opposite side of the column. Filters (16) are utilised to project red and green light through the column (10). Each detector assembly (28) includes a red detector (30) and a green detector (32) with red and green filters (26, 24), respectively. Due to the difference in offset of light beams transversing the column at an oblique angle through water and through air, the green detector (32) is activated by green light when the green and red light passes through the water in the column and the red detector (30) is activated when the light passes through air in the column, that is, above the water level (20) in the column. By means of a circuit connected to each detector assembly (28), it is possible to discover the level (20) of water in the column (10).

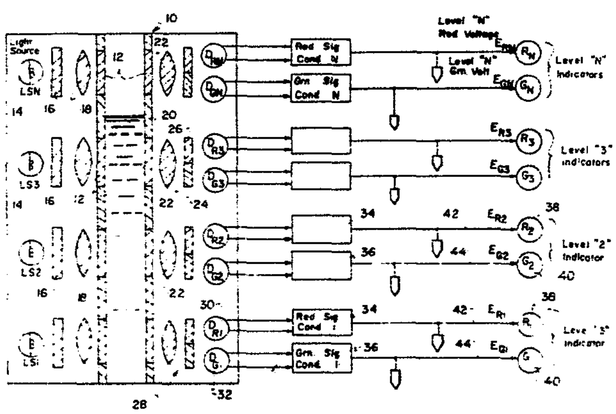

EP 0 100 225 A1

# LIQUID LEVEL GAUGES

This invention relates to liquid level gauges.

Liquid level gauges, for example water level gauges for boiler drum water levels, are known. One known such gauge utilises a column of coloured lights that provide a visual indication of water level. Those lights below the water level are green while those lights above the water level are red. Other means used to indicate drum water level for control purposes comprises a differential manometer or differential diaphragm using a magnetic linkage and both providing means for visual indication of water level on a graduated scale.

Typically, the known gauges are located about 30.5 to 152 m (100 to 500 feet) from a control room for controlling operation of the boiler. For the remote reading of such water level indication devices or gauges, an operator must either view the device through a series of mirrors or utilise closed circuit television for viewing the device.

The remote reading of water levels can be facilitated by utilising fibre optics to transmit optical signals to the control room.

US Patent No. 3 713 388 to Kind discloses a fibre optics system for water level detection.

The use of different coloured light in liquid level detection is disclosed in US Patent No. 3 648 521 to Amendolia. US Patent No. 3 548 657 to Panerai et al discloses the utilisation of phototransducers at a terminating point of a light source to provide a remote electrical indication of water level in a tank.

Many level detecting systems utilise plural detectors so that a multiplexing technique is also useful. US Patent No. 4 084 426 to Gales discloses a system for scanning a plurality of detectors in monitoring the condition of a fluid within a vertical tube.

According to the invention there is provided a liquid level gauge which comprises a liquid column for containing liquid, light means on one side of the column for shining light having at least a first and second colour through the column, the light of the first colour passing through the column relatively readily (without offset) above the liquid level and the light of the second colour passing through the column relatively readily (with offset) below the level of liquid, at least one detector assembly on an opposite side of the column for receiving the first and second colour light, the detector assembly comprising a first detector sensitive to the first colour light and a second detector sensitive to the second colour light so that the detector assembly always includes one activated detector and one non-activated detector, and a detector circuit connected to the detector assembly for indicating the state of the detector assembly.

A preferred liquid level gauge embodying the invention and described hereinbelow includes a fault detector connected to the detector assembly for verifying that one detector is activated and one detector is not activated, and for providing a fault signal when that condition is violated, i.e. when neither of the detectors is activated or both of the detectors are activated. The preferred liquid level gauge permits the convenient remote detection of water level in a column while, at the same time, providing reliable fault detection to maintain the integrity of the gauge.

In the preferred embodiment disclosed hereinbelow, the light means comprises a plurality of individual light sources each with a filter for filtering out all but red and green light, and there are a plurality of the detector assemblies each comprising a pair of detectors and each aligned with a respective one of the light sources, each detector assembly having a green light filter in front of its respective second detector and a red light filter in front of its respective first detector. Each of the detectors in each detector assembly is provided with a signal conditioner for converting the detector signal into a voltage which can be utilised to light either a green or a red lamp at a remote location to provide a visual analogous level display of liquid level in the column, with all the indicators below the liquid level showing green and all indicators above the liquid level showing red.

All the light provided to the column can be supplied by a single light source with the use of a plurality of detector assemblies or, conversely, a single detector assembly can be utilised with a plurality of light sources, with the light sources being activated sequentially to determine a water level.

The water level gauge described hereinbelow is easily adaptable to computer technology. Thus, the signals from the water level gauge can be directly interfaced with computer-based data acquisition systems or with other electric control and operation information systems.

The liquid level gauge or detector described hereinbelow is simple in design, rugged in construction and economical to manufacture.

The invention will now be further described, by way of illustrative and non-limiting example, with reference to the accompanying drawings, in which:

Figure 1 is a diagram illustrating a liquid level gauge embodying the invention;

Figure 2 is a simplified block diagram of a fault detector which can be utilised with the gauge of Figure 1;

Figure 3 is a block diagram of a digital to analog conversion arrangement which can be used with the gauge of Figure 1; and

Figure 4 is a schematic representation in greater detail of the fault detector of Figure 2.

Figure 1 of the drawings shows a liquid level detector, in particular a water level detector, which includes a water column 10 which may be transparent or include a plurality of aligned transparent windows 12. A plurality of light sources 14 are provided on one side of the column 10. A red/green filter 16 and a lens 18 are positioned in front of each light source 14 so that predominantly red and green light passes into the water column through the windows 12, which face the lenses 18. As is known, such a light beam passing through such a water column, and at an oblique angle, is offset so that below the water level 20, in the column 10, predominantly green light passes through the lenses 22 on the opposite side of the column. Above the water level 20 predominantly red light passes through the lenses 22. Each of a plurality of photodetector assemblies 28 includes one such lens 22, a red filter 26, a green filter 24 and a pair of detectors 30 and 32. Each detector 32 is a green detector and receives green light through the associated lens 22 and filter 24 when green light passes through water in the column 10. Each green light detector 32 is thus activated below the water level 20. Above the water level 20 the detectors 30, which are red light detectors, are activated by red light passing through the lenses 22 and filters 26. In this manner, one of the detectors 30, 32 in each detector assembly is activated while the other detector is deactivated. As will be set forth in greater detail hereinunder, this condition provides the possibility for reliable and accurate fault detection for the elements of the system.

An output of each photodetector 30, 32 is fed to a respective signal conditioner 34, 36 which provides an output voltage level ($E_{GN}$ or $E_{RN}$) when light is present on its detector. Thus, a red and a green signal conditioner are required for each desired level. The signal conditioners then drive, via lines 42, 44, an array of red and green indicators 38, 40 such that the green indicators are "on" with water present and the red indicators are "on" with water absent.

In the event of failure of either a light source 14 or a detector 30, 32, a fault indicator circuit 50 shown in Figure 2 provides a warning indication to an operator at an indicator 52. Since only one signal conditioner 34, 36 for each level (either red or green) should be providing an output signal, it is a relatively easy matter to detect when this condition is violated.

If desired, the outputs of the signal conditioners 34, 36 can be converted to an analog signal by a digital to analog converter (Figure 3) to provide a meter output (analog indicator 54) of the water level; or may be converted to a digital code for input to a digital monitoring and control system.

Multiplexing the signals permits reduction of the number of wires necessary to implement the readout. This may be accomplished in several ways. Light emitting diodes (LEDs) could be used as pulsed light sources. The lamps 14 could be pulsed or modulated, although at a much slower rate. The use of an array of pulsed light sources in conjunction with a single detector would effect multiplexing. Each light source would be pulsed at a different frequency or in a different time slot and synchronous detection used at the other end of the transmission link (e.g. at an operator's panel or in a data acquisition or control system) to separate the signals and extract the level information.

A single light source may be used with an array of detectors. The output of the array would then be scanned to determine the level information.

The fault detector 50 is shown in more detail in Figure 4. It comprises, for each pair of lines 42, 44, an exclusive-OR circuit 60 which has a pair of connections for the lines 42, 44, only one of which should carry a signal corresponding either to a green or a red light detection. Each exclusive-OR circuit 60 is connected to an inverter 62 which inverts the output signal and provides it to one of a plurality of inputs of an OR-gate 64 and an AND-gate 66. A selector switch 68 is provided for connecting an LED driver circuit 70 selectively to the OR-gate 64 or the AND-gate 66. The LED driver circuit 70 is connected to an LED 72 which produces a light signal upon the occurrence of a fault.

In operation, the switch 68 is connected to the OR-gate 64. With only one of the lines 42, 44 carrying a signal into each exclusive OR-gate 60, each OR-gate produces at its output a "true" or one signal. This signal is provided to the input of the associated inverter 62 and converted to a "false" or zero signal at the output thereof. With all zero or "false" signals provided to the OR-gate 64, no signal is provided to the LED driver circuit 70 and the LED 72 is not activated. If any of the activated detectors 30, 32 fails, the associated exclusive-OR gate 60 will receive no signals at either of its inputs and will therefore produce a "false" or zero signal. This signal is inverted by the associated inverter 62 so that a "true" or one signal is provided to the OR-gate 64 which, in turn, activates the LED driver 70 and LED 72. With a failure in any of the light sources 14, a similar condition occurs.

To test the condition of the circuit, the switch 68 is switched to its test position whereby it is connected to the AND-gate 66. The AND-gate 66 functions to test the integrity of each detector 30, 32 and ensure that a detector is not producing an output signal when it should not produce such a signal. This is done by switching off all the light sources 14. In this condition; all of the exclusive-OR gates 60 should produce a zero or false signal, which signals are inverted to true signals by the inverters 62 and activate each input of AND-gate 66. The LED driver circuit 70 is thus activated, which lights the LED 72. If the LED 72 does not light, this indicates that one detector 30, 32 and one of the detector assemblies is providing a signal when it should not provide such a signal.

The switch 68 may also be used to test the output indicators 38, 40, which are typically LEDs or lamps. In a test mode, all level indicating LEDs or lamps as well as the failure indicator 72 or 52 must light to pass the test.

## CLAIMS

1. A liquid level gauge characterised by:

a liquid column (10) for containing liquid;

light means on one side of the column (10) for obliquely shining light having at least a first and a second colour through the column, the light of the first colour passing through the column without offset above a level (20) of liquid therein and the light of the second colour passing through the column being offset below the level of liquid therein;

at least one detector assembly (28) on an opposite side of the column for receiving light from the light means, the detector assembly comprising a first detector (30) for generating a first signal when light of the first colour shines on the detector assembly and a second detector (32) for generating a second signal when light of the second colour shines on the detector assembly; and

a detector circuit connected to said at least one detector assembly (28) for indicating which of the first and second detectors (30, 32) is producing a signal.

2. A liquid level gauge according to claim 1, wherein the light means comprises a plurality of light sources (14) spaced along the column (10).

3. A liquid level gauge according to claim 2, including a red/green filter (16) between each light source (14) and the column, the first colour being red and the second colour being green.

4. A liquid level gauge according to claim 1, including a plurality of detector assemblies (28) spaced along the column (10), each detector assembly including a first and second detector (30, 32).

5. A liquid level gauge according to claim 4, including red/green filter means (16) between the light means and the column (10) for passing red and green light into the column, each detector assembly (28) including a red filter (26) between its first detector (30) and the column (10) and a green filter between its second detector (32) and the column (10).

6. A liquid gauge according to claim 2, including a plurality of detector assemblies (28) spaced along the column (10) with each detector assembly opposite a corresponding light source (14), and a filter (16) between each light source (14) and the column (10) for providing light of the first and second colours to the column, each detector assembly (28) comprising a first detector (30) and a second detector (32), a first filter (26) between each first detector (30) and the column (10) for filtering all but light of the first colour and passing light of the first colour to the first detector (30) and a second filter (24) between each second detector (32) and the column for filtering all but light of the second colour and providing light of the second colour to the second detector (32).

7. A liquid level gauge according to claim 1, wherein the detector circuit includes a fault detector (50) connected to the first and second detectors (30, 32) for indicating a fault when any condition arises other than a condition where a single signal is received from a single one of the first and second detectors (30, 32).

8. A liquid level gauge according to claim 6, wherein the detector circuit includes a fault detector (50) connected to each of the first and second detectors (30, 32) of each of the detector assemblies (28), the fault detector (50) being operable to generate a fault signal upon receiving any except a single signal from each detector assembly (28).

9. A liquid level gauge according to claim 8, wherein the fault detector (50) comprises an exclusive-OR gate (60) connected to each detector assembly (28), the gate (60) having a first input connected to the associated first detector (30) and a second input connected to the associated second detector (32), an inverter (62) connected to an output of each exclusive-OR gate (60), an OR-gate (64) having a separate input connected to each of the inverters (62), and indicator means (70, 72) connected to an output of the OR-gate (64).

10. A liquid level gauge according to claim 9, including an AND-gate (66) having a separate input connected to each of the inverters (62), a switch (68) for selectively connected the indicator means (70, 72) to the output of the OR-gate (64) or to an output of the AND-gate (66) whereby, with the indicator means connected to the OR-gate, a fault during operation an be detected and, with the indicator means connected to the AND-gate, a fault can be detected with all of the light sources (14) extinguished.

11. A liquid level gauge according to any one of the preceding claims , wherein the detector circuit comprises a first signal conditioner (34) connected to the first detector (30), a second signal conditioner (36) connected to the second detector (32), a first light indicator (38) connected to the first signal conditioner (34) and a second light indicator (40) connected to the second signal conditioner (36).

0100225



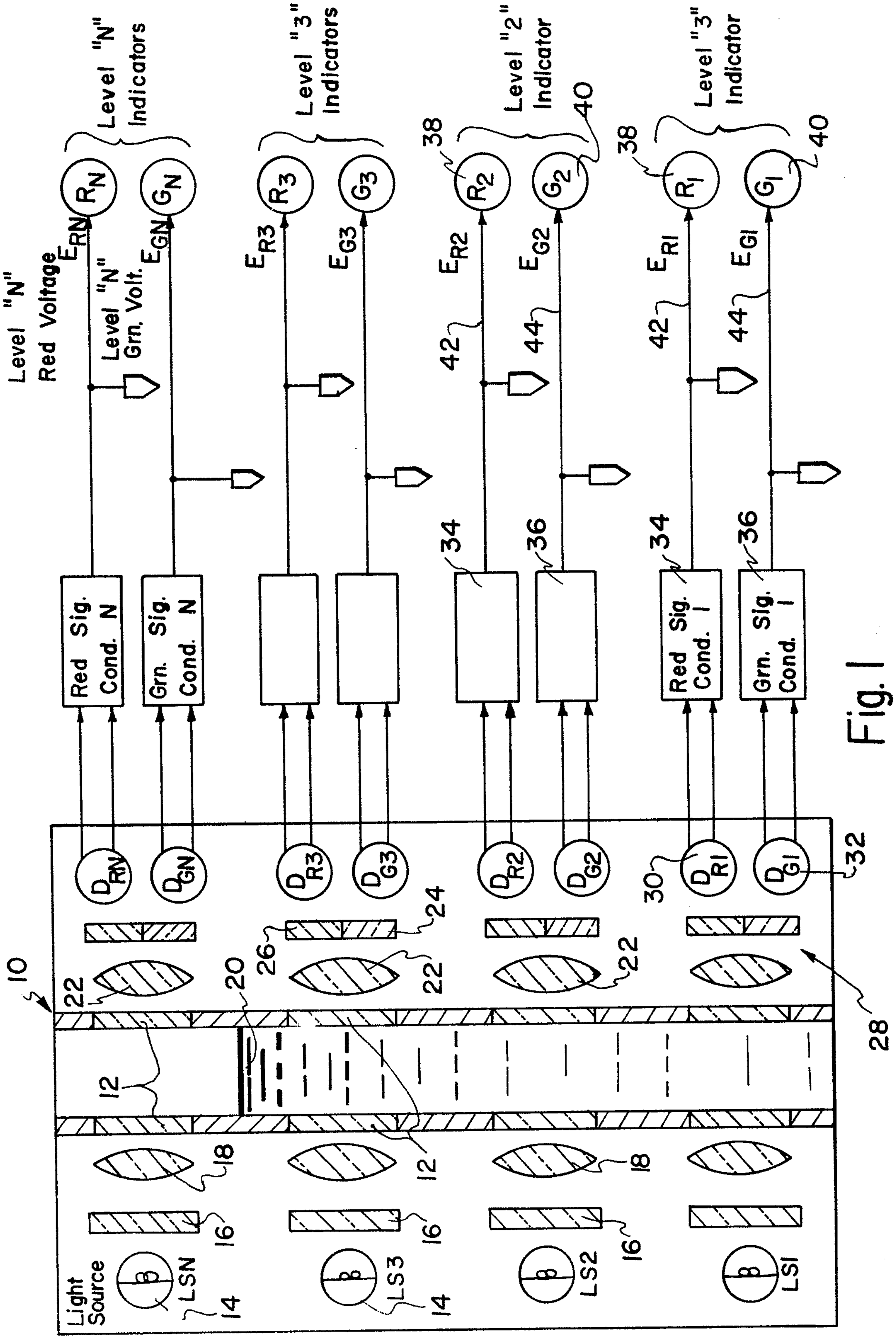


Fig. I

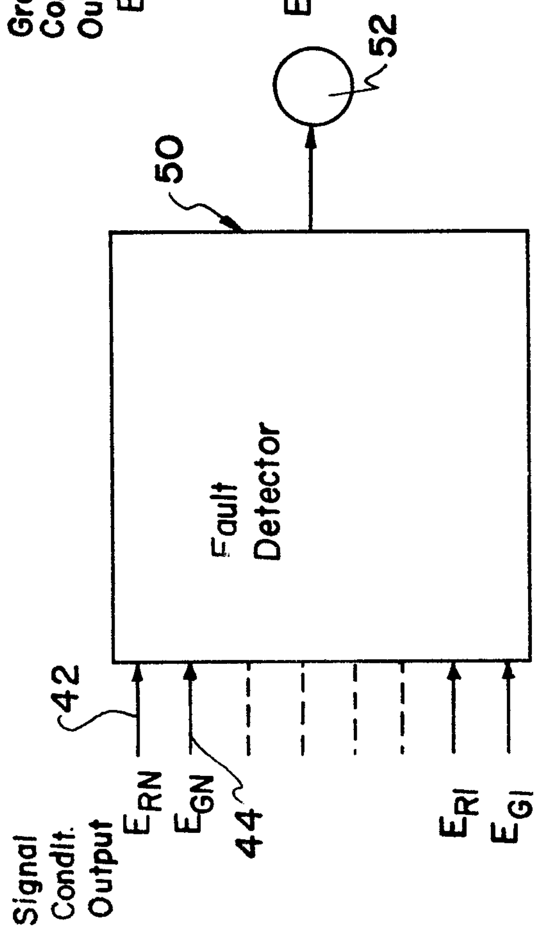
Signal
Condit.
Output
$E_{RN}$
$E_{GN}$
42
44
$E_{RI}$
$E_{GI}$
Fault
Detector
50
52

Fig. 2

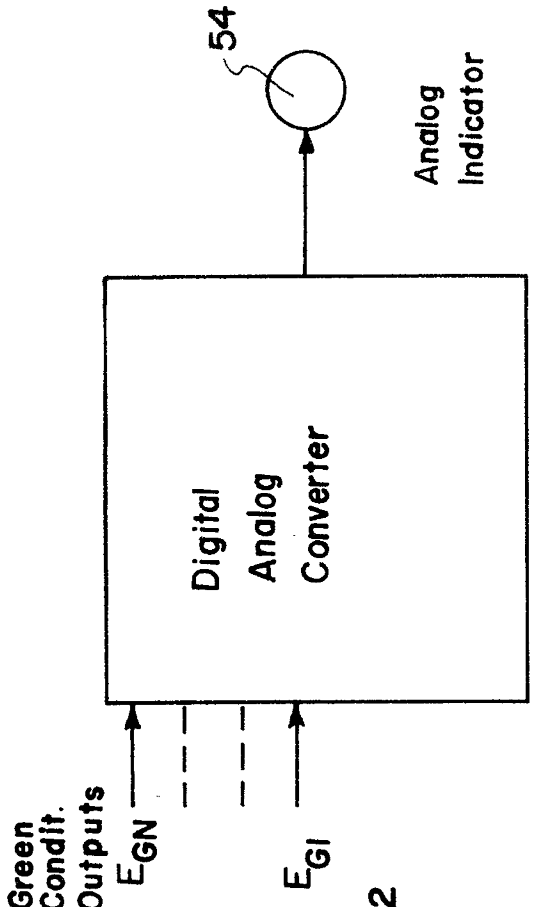
Green
Condit.
Outputs
$E_{GN}$
$E_{GI}$
Digital
Analog
Converter
54
Analog
Indicator

Fig. 3

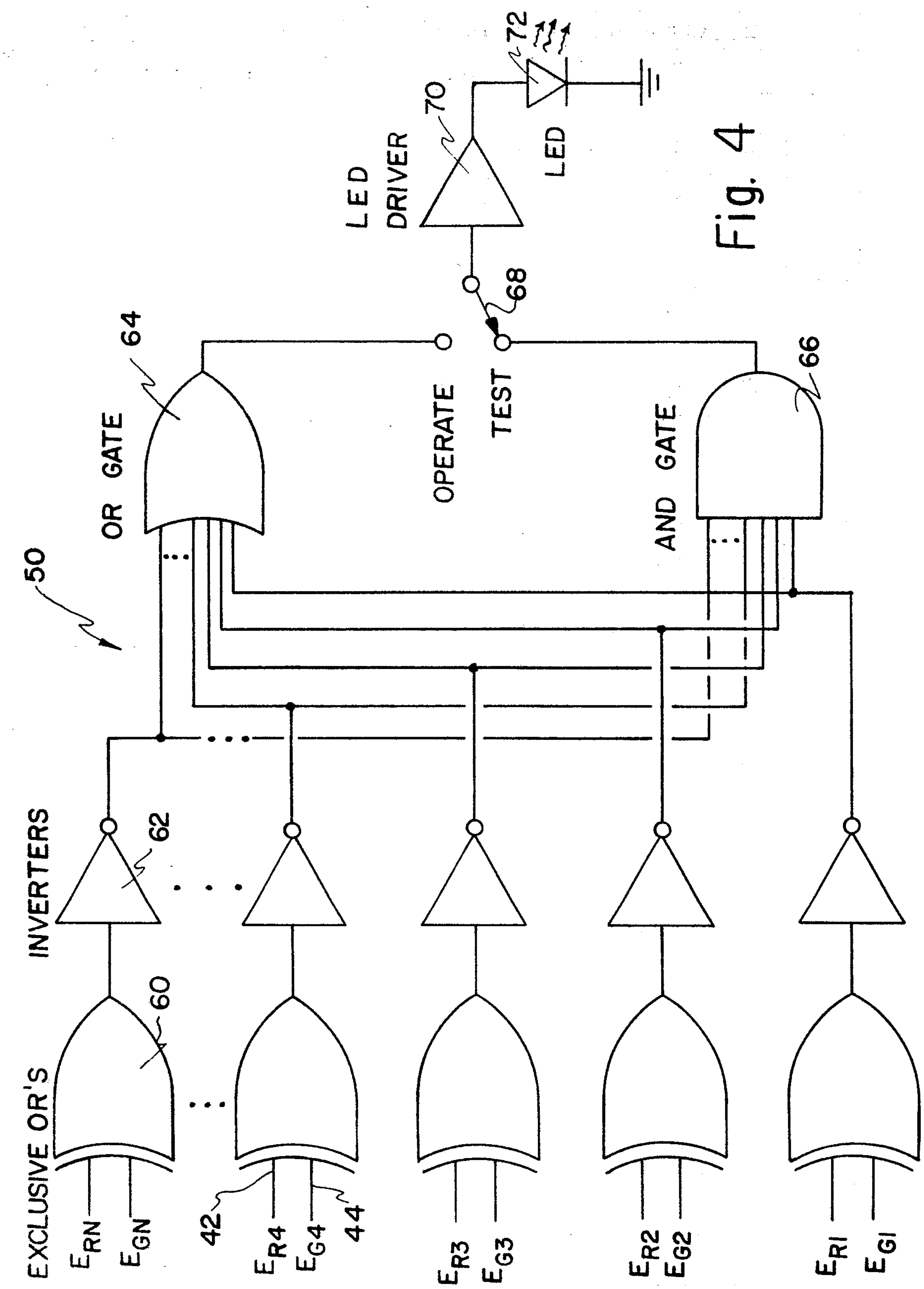
LED DRIVER
70
72
LED
68
64
OR GATE
OPERATE
TEST
66
AND GATE
50
INVERTERS
62
EXCLUSIVE OR'S
60
42
44
$E_{RN}$
$E_{GN}$
$E_{R4}$
$E_{G4}$
$E_{R3}$
$E_{G3}$
$E_{R2}$
$E_{G2}$
$E_{RI}$
$E_{GI}$

Fig. 4

0100225

European Patent Office

# EUROPEAN SEARCH REPORT

Application number

EP 83304290.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,A | US - A - 4 084 426 (GALES) * Fig.; column 3, line 16 - column 6, line 11 * -- | 1,2,4 | G 01 F 23/00 |
| D,A | US - A - 3 548 657 (PANERAI) * Abstract; fig. 1,2 * -- | 1,2,4 | |
| A | US - A - 3 005 345 (KAUFMAN) * Fig. 1,2,3; column 2, line 33 - column 3, line 50 * -- | 1 | |
| D,A | US - A - 3 648 521 (AMENDOLIA) * Fig. 1,4 * -- | 1,3 | |
| D,A | US - A - 3 713 338 (KIND) * Fig. 1,2 * ---- | | TECHNICAL FIELDS SEARCHED (Int. Cl. 3) G 01 F 23/00 |

The present search report has been drawn up for all claims

| Place of search | Date of completion of the search | Examiner |
|---|---|---|
| VIENNA | 25-10-1983 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document